# EUROPEAN PATENT APPLICATION

(11) **EP 3 073 213 A1**
(43) Date of publication of application: **28.09.2016**
(21) Application number: 16160672.8
(22) Date of filing: 16.03.2016
(51) Int. Cl.: F25B 49/02, F25B 13/00

(54) **AIR-CONDITIONING-SYSTEM CONTROL APPARATUS, AIR-CONDITIONING SYSTEM, AIR-CONDITIONING-SYSTEM CONTROL PROGRAM, AND AIR-CONDITIONING-SYSTEM CONTROL METHOD**

(30) Priority: 26.03.2015 JP 2015064451
(71) Applicant: Mitsubishi Heavy Industries, Ltd., Tokyo 108-8215 (JP)
(72) Inventor: Kato, Takahiro, Tokyo, 108-8215 (JP)
(74) Representative: Henkel, Breuer & Partner

(57) **Abstract**

An air-conditioner control apparatus determines whether inching, in which starting and stopping are repeated in a certain period of time, has occurred at a compressor and suppresses the performance of the compressor if it is determined that the inching has occurred. In the light of the fact that the occurrence of the inching at the compressor is mainly caused by excessive performance, the occurrence of the inching can be suppressed by suppressing the performance of the compressor when the inching has occurred.

## Description

### {Technical Field}

The present invention relates to an air-conditioning-system control apparatus, an air-conditioning system, an air-conditioning-system control program, and an air-conditioning-system control method.

### {Background Art}

In general, when an operation is performed in an air-conditioning system in which a plurality of indoor units are provided for a single outdoor unit, a set temperature at which the operation of each indoor unit is stopped (thermo-OFF) and a set temperature at which the operation of each indoor unit is started (thermo-ON) are set.

The timing for thermo-ON and the timing for thermo-OFF at the indoor unit are determined on the basis of a set temperature and an indoor intake temperature. Specifically, when the indoor intake temperature reaches the set temperature, the indoor unit enters the thermo-OFF state, thereby stopping the operation of the indoor unit, and, when the indoor intake temperature shifts from the set temperature, the indoor unit enters the thermo-ON state, thereby starting the operation of the indoor unit (see PTL 1). Then, when all indoor units enter the thermo-OFF state, the compressor also stops, and, when an indoor unit enters the thermo-ON state, the compressor restarts.

Here, the performance of an indoor unit is selected according to the estimation of the load at a site where the indoor unit is installed. However, there is a case in which the performance of the indoor unit is large for an actual load at the installation site; in that case, after the operation is started due to the thermo-ON, the indoor intake temperature reaches the set temperature in a short time, and thereby the indoor unit enters the thermo-OFF state, thus repeating the thermo-ON and the thermo-OFF in a short time.

Furthermore, there is a case in which, even though the performance of the indoor unit and the load are appropriately balanced, the indoor unit repeats the thermo-ON and the thermo-OFF due to the inadequacies of the installation environment of the indoor unit, e.g., the temperature of air-conditioned air reflected at a wall is erroneously detected as the indoor intake temperature because the distance between a discharge port of the indoor unit and the wall is too short, or discharged air from the indoor unit is suctioned as suction air of the indoor unit (a so-called short circuit) for various reasons.

### {Citation List}

### {Patent Literature}

{PTL 1} Japanese Unexamined Patent Application, Publication No. 2012-193901

### {Summary of Invention}

### {Technical Problem}

When the indoor unit repeats the thermo-ON and the thermo-OFF as described above, the compressor may fall into an operation in which starting and stopping are repeated in a short time (hereinafter, referred to as "inching"). Because such inching may cause damage to the compressor or various electrical components, the inching is preferably suppressed to improve the reliability of the air-conditioning system itself.

The present invention has been made in view of such circumstances, and an object thereof is to provide an air-conditioning-system control apparatus, an air-conditioning system, an air-conditioning-system control program, and an air-conditioning-system control method that enable a more-highly-reliable operation of the air-conditioning system by suppressing the inching at the compressor.

### {Solution to Problem}

In order to solve the above-described problem, the air-conditioning-system control apparatus, the air-conditioning system, the air-conditioning-system control program, and the air-conditioning-system control method according to the present invention employ the following solutions.

According to a first aspect, the present invention provides an air-conditioning-system control apparatus for an air-conditioning system equipped with an outdoor unit and an indoor unit, including: a determination means that determines whether inching, in which starting and stopping are repeated in a certain period of time, has occurred at a compressor; and a performance suppressing means that suppresses the performance of the compressor if the determination means determines that the inching has occurred.

According to this configuration, the determination means determines whether inching, in which starting and stopping are repeated in a certain period of time, has occurred at the compressor.

Then, if it is determined that the inching has occurred at the compressor, the performance suppressing means suppresses the performance of the compressor. Specifically, in the light of the fact that the occurrence of the inching at the compressor is mainly caused by excessive performance, the occurrence of the inching can be suppressed by suppressing the performance of the compressor when the inching has occurred. Specifically, in this configuration, the energy-saving control, which has been conventionally performed for power saving, is performed for the purpose of suppressing the inching at the compressor.

Therefore, this configuration enables a more-highly-reliable operation of the air-conditioning system by suppressing the inching at the compressor.

In the above-described first aspect, the performance suppressing means may adjust a target pressure of a refrigerant so that a rotational speed of the compressor is made lower than that when the inching has occurred.

According to this configuration, it is possible to easily suppress the performance of the compressor by adjusting the target pressure.

In the above-described first aspect, the performance suppressing means may make an upper rotational speed of the compressor lower than that when the inching has occurred.

According to this configuration, it is possible to easily suppress the performance of the compressor by reducing the set value for the upper rotational speed of the compressor.

In the above-described first aspect, it is possible to further include a restart prohibiting means that prohibits restarting of the compressor for a predetermined period of time if the determination means determines that the inching has occurred, in which the performance suppressing means may suppress the performance of the compressor when the difference between a set temperature of the indoor unit and a room temperature is equal to or smaller than a predetermined value.

According to this configuration, when the inching has occurred at the compressor, the restart prohibiting means prohibits the compressor from restarting for a predetermined period of time. Then, when the difference between the set temperature of the indoor unit and the room temperature is equal to or smaller than the predetermined value, the performance of the air-conditioning system is suppressed in order to suppress the occurrence of the inching at the compressor. Note that, when the difference between the set temperature of the indoor unit and the room temperature exceeds the predetermined value, the normal control, under which the performance of the compressor is not suppressed, is performed.

Therefore, with this configuration, it is possible to more reliably suppress the inching at the compressor while preventing the user from losing the feeling of air conditioning.

According to a second aspect, the present invention provides an air-conditioning system, including: an outdoor unit; an indoor unit; and one of the above-described control apparatuses.

According to a third aspect, the present invention provides an air-conditioning-system control program for an air-conditioning system equipped with an outdoor unit and an indoor unit, the program causing a computer to function as: a determination means that determines whether inching, in which starting and stopping are repeated in a certain period of time, has occurred at a compressor; and a performance suppressing means that suppresses the performance of the compressor if the determination means determines that the inching has occurred.

According to a fourth aspect, the present invention provides an air-conditioning-system control method for an air-conditioning system equipped with an outdoor unit and an indoor unit, the method including: a first processing step of determining whether inching, in which starting and stopping are repeated in a certain period of time, has occurred at a compressor; and a second processing step of suppressing the performance of the compressor if it is determined in the first processing step that the inching has occurred.

### {Advantageous Effects of Invention}

According to the present invention, an advantageous effect is afforded in that a more-highly-reliable operation of the air-conditioning system is enabled by suppressing the inching at the compressor.

### {Brief Description of Drawings}

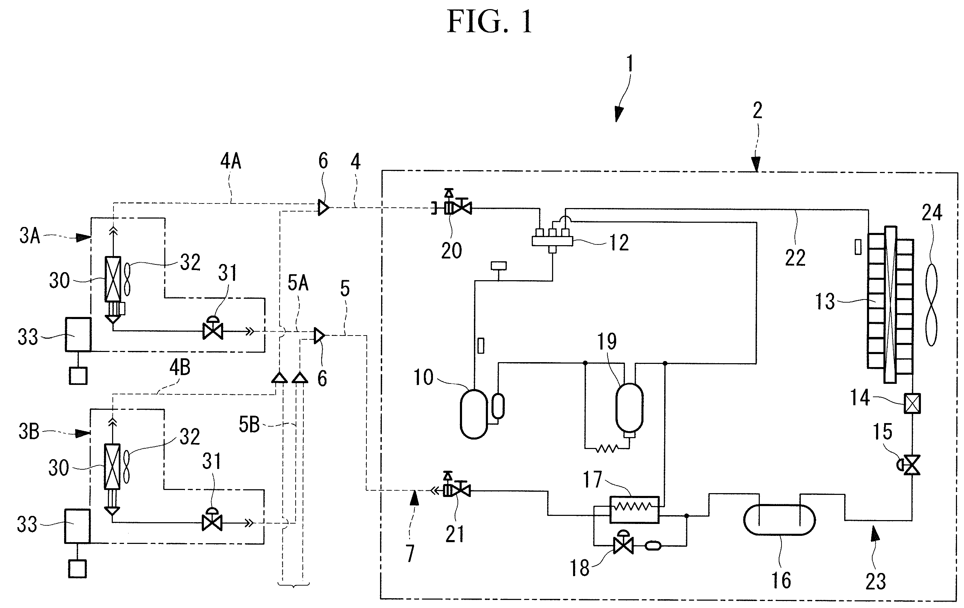

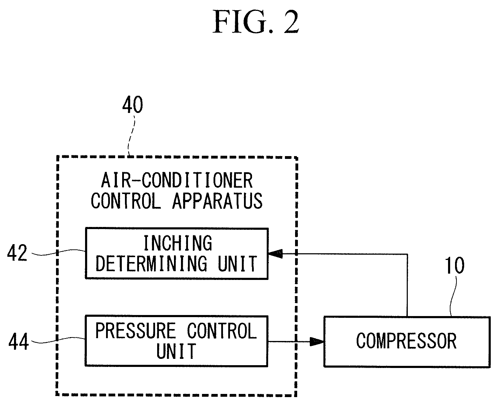

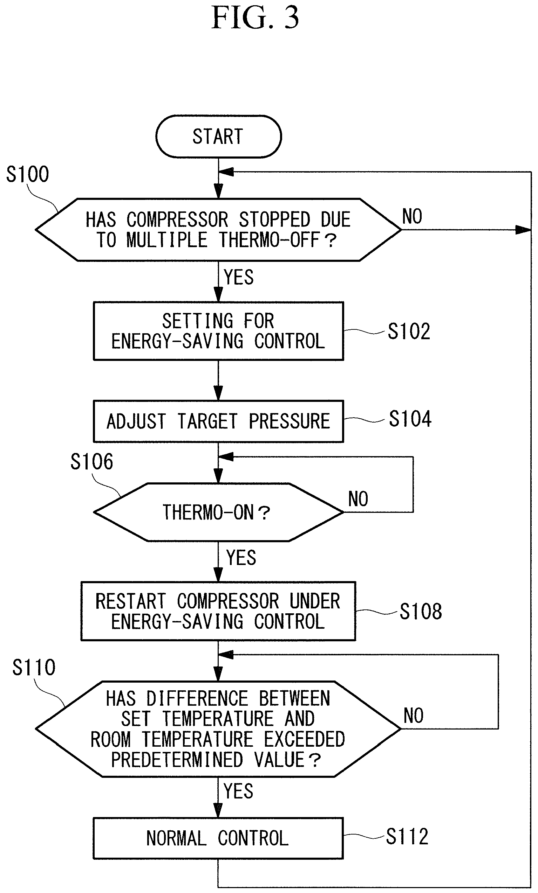

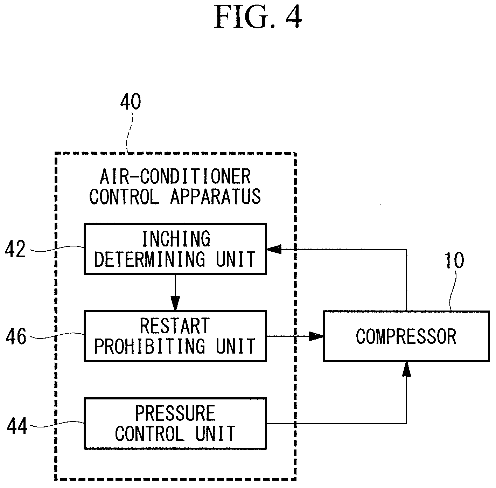

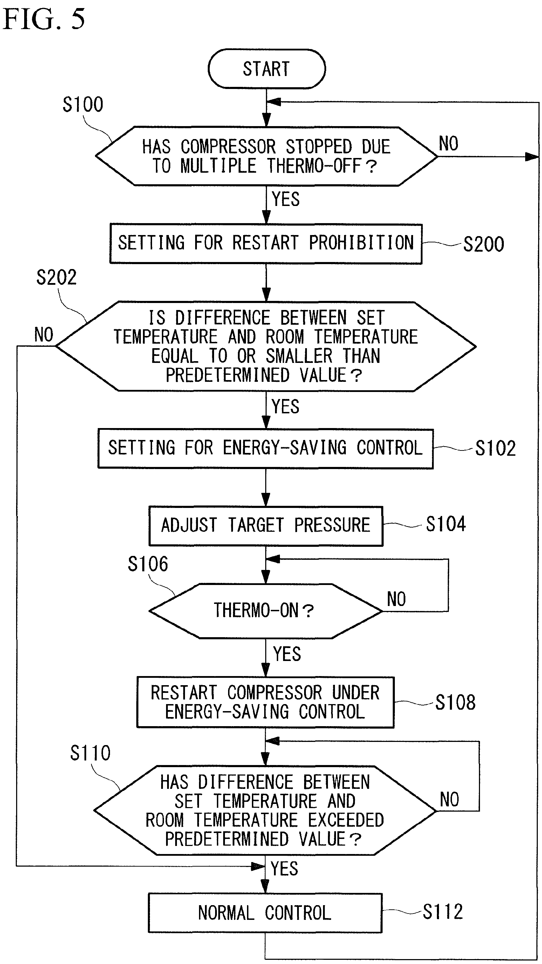

{Fig. 1} Fig. 1 is a refrigerant circuit diagram of a multi-type air-conditioning system according to a first embodiment of the present invention.
{Fig. 2} Fig. 2 is a block diagram showing the electrical configuration of an air-conditioner control apparatus according to the first embodiment of the present invention.
{Fig. 3} Fig. 3 is a flowchart showing the flow of anti-inching processing according to the first embodiment of the present invention.
{Fig. 4} Fig. 4 is a block diagram showing the electrical configuration of an air-conditioner control apparatus according to a second embodiment of the present invention.
{Fig. 5} Fig. 5 is a flowchart showing the flow of anti-inching processing according to the second embodiment of the present invention.

### {Description of Embodiments}

An air-conditioning-system control apparatus, an air-conditioning system, an air-conditioning-system control program, and an air-conditioning-system control method according to embodiments of the present invention will be described below with reference to the drawings.

### First Embodiment

A first embodiment of the present invention will be described below.

Fig. 1 shows a refrigerant circuit diagram of a multi-type air-conditioning system in which a plurality of indoor units are connected to a single outdoor unit, according to a first embodiment of the present invention.

In a multi-type air-conditioning system 1, a plurality of indoor units 3A and 3B are connected in parallel to a single outdoor unit 2. The plurality of indoor units 3A and 3B are connected in parallel to each other via branching units 6 located in a gas-side pipe 4 and a liquid-side pipe 5 that are connected to the outdoor unit 2.

The outdoor unit 2 is provided with an inverter-driven compressor 10 that compresses a refrigerant; a four-way switching valve 12 that switches the circulation direction of the refrigerant; an outdoor heat-exchanger 13 that exchanges heat between the refrigerant and outside air; a supercooling coil 14 that is formed integrally with the outdoor heat-exchanger 13; an outdoor expansion valve (EEVH) 15; a receiver 16 that accumulates a liquid refrigerant; a supercooling heat exchanger 17 that subjects the liquid refrigerant to supercooling; a supercooling expansion valve (EEVSC) 18 that controls the amount of refrigerant flowing into the supercooling heat exchanger 17; an accumulator 19 that separates a liquid component from refrigerant gas to be suctioned into the compressor 10, thus allowing only a gaseous component to be suctioned into the compressor 10; a gas-side operation valve 20; and a liquid-side operation valve 21.

The above-described devices in the outdoor unit 2 are sequentially connected via a refrigerant pipe 22, thus configuring a known outdoor-side refrigerant circuit 23. Furthermore, the outdoor unit 2 is provided with an outdoor fan 24 that blows outside air toward the outdoor heat-exchanger 13.

The gas-side pipe 4 and the liquid-side pipe 5 are refrigerant pipes connected to the gas-side operation valve 20 and the liquid-side operation valve 21 of the outdoor unit 2, respectively, and, at the time of installation at a site, the pipe lengths are appropriately set according to the distances from the outdoor unit 2 to the plurality of indoor units 3A and 3B to be connected to the outdoor unit 2. The plurality of branching units 6 are provided at intermediate points in the gas-side pipe 4 and the liquid-side pipe 5, and the appropriate number of indoor units 3A and 3B are connected via the branching units 6. Accordingly, a single closed refrigeration cycle (refrigerant circuit) 7 is configured.

The indoor units 3A and 3B are each provided with an indoor heat exchanger 30 that subjects indoor air to heat exchange with the refrigerant, thus cooling or heating the indoor air and making it available for indoor air-conditioning; an indoor expansion valve (EEVC) 31; an indoor fan 32 that circulates indoor air via the indoor heat exchanger 30; and an indoor controller 33. The indoor units 3A and 3B are connected to the branching units 6 via branched gas-side pipes 4A and 4B and branched liquid-side pipes 5A and 5B, which are provided at the indoor sides.

In the above-described multi-type air-conditioning system 1, a cooling operation is performed as follows.

High-temperature, high-pressure refrigerant gas that has been compressed at the compressor 10 and discharged therefrom is circulated to the outdoor heat-exchanger 13 by the four-way switching valve 12 and is condensed to liquid at the outdoor heat-exchanger 13 through heat exchange with outside air blown by the outdoor fan 24. This liquid refrigerant is further cooled at the supercooling coil 14, then passes through the outdoor expansion valve 15, and is temporarily accumulated in the receiver 16.

The liquid refrigerant, whose circulation amount is adjusted at the receiver 16, is partially branched from a liquid refrigerant pipe, while flowing in the liquid refrigerant pipe via the supercooling heat exchanger 17, and is subjected to supercooling through heat exchange with the refrigerant that has been adiabatically expanded at the supercooling expansion valve 18. This liquid refrigerant is guided from the outdoor unit 2 to the liquid-side pipe 5 via the liquid-side operation valve 21 and is branched, via the branching unit 6, into the branched liquid-side pipes 5A and 5B of the indoor units 3A and 3B.

The liquid refrigerant flowing into the branched liquid-side pipes 5A and 5B flows into each of the indoor units 3A and 3B, is adiabatically expanded at the indoor expansion valve 31, and flows into the indoor heat exchanger 30 in the form of a gas-liquid two-phase flow. At the indoor heat exchanger 30, heat exchange is performed between indoor air circulated by the indoor fan 32 and the refrigerant, thus cooling the indoor air and making it available for indoor cooling. On the other hand, the refrigerant is gasified, flows into the branching unit 6 via the corresponding branched gas-side pipe 4A or 4B, and joins, in the gas-side pipe 4, the refrigerant gas flowing from the other indoor unit.

The refrigerant gas joining in the gas-side pipe 4 returns to the outdoor unit 2 again, passes through the gas-side operation valve 20 and the four-way switching valve 12, joins refrigerant gas flowing from the supercooling heat exchanger 17, and is then guided to the accumulator 19. At the accumulator 19, the liquid component contained in the refrigerant gas is separated, and only the gaseous component is suctioned into the compressor 10. This refrigerant is compressed again at the compressor 10, and the above-described cycle is repeated, thereby performing the cooling operation.

On the other hand, a heating operation is performed as follows.

High-temperature, high-pressure refrigerant gas that has been compressed at the compressor 10 and discharged therefrom is circulated to the gas-side operation valve 20 via the four-way switching valve 12. This high-pressure gas refrigerant is guided from the outdoor unit 2 via the gas-side operation valve 20 and the gas-side pipe 4 and is guided to the plurality of indoor units 3A and 3B via the branching unit 6 and the branched gas-side pipes 4A and 4B, which are provided at the indoor sides.

The high-temperature, high-pressure refrigerant gas guided to each of the indoor units 3A and 3B is subjected, at the indoor heat exchanger 30, to heat exchange with the indoor air circulated via the indoor fan 32, and the thus-heated indoor air is blown into the room for heating. On the other hand, the refrigerant condensed to liquid at the indoor heat exchanger 30 reaches the branching unit 6 via the indoor expansion valve 31 and the corresponding branched liquid-side pipe 5A or 5B, joins the refrigerant flowing from the other indoor unit, and returns to the outdoor unit 2 via the liquid-side pipe 5. Note that, during heating, in each of the indoor units 3A and 3B, the degree of opening of the indoor expansion valve 31 is controlled via the indoor controller 33 so that the refrigerant outlet temperature or the degree of supercooling of the refrigerant at the indoor heat exchanger 30, which functions as a condenser, becomes a control target value.

The refrigerant that has returned to the outdoor unit 2 reaches the supercooling heat exchanger 17 via the liquid-side operation valve 21, is subjected to supercooling as in the case of cooling, and then flows into the receiver 16, where it is temporarily accumulated, thus adjusting the circulation amount. This liquid refrigerant is supplied to the outdoor expansion valve 15, thus being adiabatically expanded, and flows into the outdoor heat-exchanger 13 via the supercooling coil 14.

At the outdoor heat-exchanger 13, heat exchange is performed between outside air blown from the outdoor fan 24 and the refrigerant, and the refrigerant absorbs heat from the outside air, thus being evaporated and gasified. This refrigerant flows from the outdoor heat-exchanger 13, passes through the four-way switching valve 12, joins the refrigerant gas flowing from the supercooling heat exchanger 17, and is then guided to the accumulator 19. At the accumulator 19, the liquid component contained in the refrigerant gas is separated, and only the gaseous component is suctioned into the compressor 10 and is again compressed at the compressor 10. The above-described cycle is repeated, thereby performing the heating operation.

Fig. 2 is a block diagram showing the electrical configuration of an air-conditioner control apparatus 40 that controls the multi-type air-conditioning system 1 of the first embodiment. Fig. 2 shows functions related to anti-inching processing according to the first embodiment.

The air-conditioner control apparatus 40 is composed, for example, of a CPU (Central Processing Unit), a RAM (Random Access Memory), a ROM (Read Only Memory), a computer-readable storage medium, etc. Then, a series of processes for realizing various functions is stored in the storage medium in the form of a program, as an example, and the CPU reads the program into the RAM and executes information processing and calculation, thereby realizing the various functions. Note that the program may be installed in the ROM or another storage medium in advance, may be available in a state in which it is stored in a computer-readable storage medium, or may be distributed via a wired or wireless communication means. Examples of the computer-readable storage medium include a magnetic disc, a magneto-optical disc, a CD-ROM, a DVD-ROM, and a semiconductor memory. Furthermore, the air-conditioner control apparatus 40 is provided in the outdoor unit 2.

The air-conditioner control apparatus 40 is provided with an inching determining unit 42 and a pressure control unit 44.

The inching determining unit 42 determines whether inching, in which starting and stopping are repeated in a certain period of time, has occurred at the compressor 10.

It is determined that the inching has occurred when the compressor 10 stops due to thermo-OFF occurring five times or more in one hour, for example. Note that, in the multi-type air-conditioning system 1, as an example, the compressor 10 stops when all of the plurality of connected indoor units 3 enter the thermo-OFF state, and the compressor 10 restarts when at least one of the indoor units 3 enters the thermo-ON state.

The pressure control unit 44 performs energy-saving control for suppressing the performance of the compressor 10.

The pressure control unit 44 performs constant-pressure control for making the operating pressure of the refrigerant constant irrespective of the indoor load. In the constant-pressure control, the rotational speed of the compressor 10 is controlled so that the operating pressure of the refrigerant becomes a predetermined target pressure.

More specifically, in the constant-pressure control, after the initial rotational speed of the compressor 10 is determined, a target pressure is set depending on the model capacity and the rotational speed (operating frequency), a suction pressure (low pressure) is detected by a pressure sensor as a detected pressure value during cooling, and a discharge pressure (high pressure) is detected by a pressure sensor as a detected pressure value during heating. Then, in the constant-pressure control, the target pressure is compared with the detected pressure value to control the rotational speed of the compressor 10. Specifically, in the constant-pressure control during cooling, the rotational speed of the compressor 10 is decreased when the target pressure is higher than the detected pressure value, and the rotational speed of the compressor 10 is increased when the target pressure is lower than the detected pressure value. On the other hand, in the constant-pressure control during heating, the rotational speed of the compressor 10 is increased when the target pressure is higher than the detected pressure value, and the rotational speed of the compressor 10 is decreased when the target pressure is lower than the detected pressure value. Then, when the target pressure is equal to the detected pressure value, the rotational speed of the compressor 10 is made constant, thereby making the suction pressure constant during cooling and making the discharge pressure constant during heating.

Then, the pressure control unit 44 adjusts the above-described target pressure for the energy-saving control, thereby functioning as a performance suppressing means for suppressing the performance of the compressor 10.

Next, anti-inching control performed by the air-conditioner control apparatus 40 of the first embodiment will be described in detail.

If the inching determining unit 42 determines that the inching has occurred at the compressor 10, the pressure control unit 44 performs the energy-saving control, thereby suppressing the performance of the compressor 10. Specifically, in the light of the fact that the occurrence of the inching at the compressor 10 is mainly caused by excessive performance, the occurrence of the inching can be suppressed by suppressing the performance of the compressor 10 when the inching has occurred.

In this way, the air-conditioner control apparatus 40 of the first embodiment performs the energy-saving control, which has been conventionally performed for reducing power consumption, for the purpose of suppressing the inching at the compressor 10.

Fig. 3 is a flowchart showing the flow of processing (hereinafter, referred to as "anti-inching processing") executed by the air-conditioner control apparatus 40 when the anti-inching control according to the first embodiment is performed, and a program for executing this processing is stored in advance in a predetermined region of a storage means provided in the air-conditioner control apparatus 40.

First, in Step 100, it is determined whether the compressor 10 has stopped due to thermo-OFF occurring a plurality of times in a certain period of time. If an affirmative determination is made, the flow advances to Step 102. On the other hand, if a negative determination is made, the normal control (constant-pressure control) is continued. Note that, when the flow advances to Step 102, the compressor 10 is stopped.

In Step 102, setting is performed such that the compressor 10 is operated under the energy-saving control the next time the compressor 10 is restarted.

In Step 104, the target pressure is adjusted for the energy-saving control. Specifically, during cooling, the current target pressure (target low pressure) is increased. On the other hand, during heating, the current target pressure (target high pressure) is decreased. The amount of adjustment of the target pressure is adjusted by a predetermined value, for example.

Through this target-pressure adjustment, the upper rotational speed of the compressor 10 is decreased, thus suppressing the performance of the compressor 10.

In Step 106, it is determined whether at least one of the indoor units 3 has entered the thermo-ON state. If an affirmative determination is made, the flow advances to Step 108. On the other hand, if a negative determination is made, the compressor 10 remains in the stopped state.

In Step 108, the compressor 10 is restarted so as to have the target pressure adjusted in Step 104.

In Step 110, it is determined whether the difference between the set temperature of the indoor unit 3 and the room temperature (indoor intake temperature) exceeds a predetermined value (for example, 4 °C). If an affirmative determination is made, the flow advances to Step 112. On the other hand, if a negative determination is made, the energy-saving control of the compressor 10 is continued.

In Step 112, because there is a possibility that the indoor load is excessive for the performance of the compressor 10 that has been suppressed under the energy-saving control, thus making it impossible to perform cooling or heating, the energy-saving control is stopped to return to the normal control (control under which the performance of the compressor 10 is not suppressed), and the flow returns to Step 100. Accordingly, it is possible to prevent the user from losing the feeling of air conditioning.

As described above, the air-conditioner control apparatus 40 of the first embodiment determines whether the inching, in which starting and stopping are repeated in a certain period of time, has occurred at the compressor 10 and suppresses the performance of the compressor 10 if it is determined that the inching has occurred.

Therefore, the air-conditioner control apparatus 40 enables a more-highly-reliable operation of the multi-type air-conditioning system 1 by suppressing the inching at the compressor 10.

### Second Embodiment

A second embodiment of the present invention will be described below.

Note that the configuration of a multi-type air-conditioning system 1 of the second embodiment is the same as the configuration of the multi-type air-conditioning system 1 of the first embodiment shown in Fig. 1, and thus a description thereof will be omitted.

Fig. 4 shows the configuration of an air-conditioner control apparatus 40 of the second embodiment. Note that, in Fig. 4, the same reference signs as those in Fig. 2 are assigned to the same components as those in Fig. 2, and a description thereof will be omitted.

The air-conditioner control apparatus 40 of the second embodiment is provided with a restart prohibiting unit 46.

The restart prohibiting unit 46 prohibits the compressor 10 from restarting for a predetermined period of time if the inching determining unit 42 determines that the inching has occurred.

This restart prohibition has a first prohibition pattern and a second prohibition pattern, as an example.

In the first prohibition pattern, after the compressor 10 is stopped due to the thermo-OFF, restarting of the compressor 10 is prohibited for a period of time longer than usual (for example, for ten minutes, compared with three minutes in the usual case).

In the second prohibition pattern, the number of restarts of the compressor 10 per hour due to the thermo-ON (for example, up to four times per hour) is restricted.

Fig. 5 is a flowchart showing the flow of anti-inching processing of the second embodiment. Note that, in Fig. 5, the same reference signs as those in Fig. 3 are assigned to the same steps as those in Fig. 3, and a description thereof will be partially or totally omitted.

First, in Step 100, it is determined whether the compressor 10 has stopped due to thermo-OFF occurring a plurality of times in a certain period of time. If an affirmative determination is made, the flow advances to Step 200. On the other hand, if a negative determination is made, the normal control (constant-pressure control) is continued.

In Step 200, setting for prohibiting restarting of the compressor 10 is performed.

Note that the restart prohibition may be performed in either the above-described first prohibition pattern or second prohibition pattern, or in combination of them.

In Step 202, in a period of time during which restarting is prohibited, it is determined whether the difference between the set temperature of each indoor unit 3 and the room temperature (indoor intake temperature) is equal to or smaller than the predetermined value (for example, 4 °C). If an affirmative determination is made, the flow advances to Step 102, and setting is performed such that the compressor 10 is operated under the energy-saving control the next time the compressor 10 is restarted.

On the other hand, if a negative determination is made in Step 202, the flow advances to Step 112, and, even in the period of time during which restarting is prohibited, the compressor 10 is restarted under the normal control, thus restarting the operation of the indoor unit 3.

In this way, in the air-conditioner control apparatus 40 of the second embodiment, when the inching has occurred at the compressor 10, restarting of the compressor 10 is prohibited for a predetermined period of time. Then, after the elapse of the predetermined period of time, when the difference between the set temperature of the indoor unit 3 and the room temperature is equal to or smaller than the predetermined value, the performance of the air-conditioning system is suppressed in order to suppress the occurrence of the inching. On the other hand, when the difference between the set temperature of the indoor unit 3 and the room temperature exceeds the predetermined value, the normal control is performed.

Therefore, the air-conditioner control apparatus 40 of the second embodiment can more reliably suppress the inching at the compressor 10 while preventing the user from losing the feeling of air conditioning.

Although the present invention has been described above using the above-described embodiments, the technical scope of the present invention is not limited to the scope described in the above-described embodiments. Various modifications or improvements can be added to the above-described embodiments without departing from the gist of the invention, and an embodiment obtained by adding such modifications or improvements is also encompassed in the technical scope of the present invention. Furthermore, the above-described embodiments may be appropriately combined.

For example, in the above-described embodiments, a description has been given of an example type of energy-saving control in which the performance of the compressor 10 is suppressed by adjusting the target pressure; however, the present invention is not limited thereto, and another type of energy-saving control may be adopted as long as the performance of the compressor 10 can be suppressed.

For example, as another type of energy-saving control, control may be performed such that the upper rotational speed of the compressor 10 is made lower than that when the inching has occurred.

In this energy-saving control, a set value for the upper rotational speed of the compressor 10 (hereinafter, referred to as "upper-rotational-speed set value") is stored in advance in the storage means (not shown) according to the operation capacity of the indoor units 3. Note that the operation capacity of the indoor units 3 is increased as the number of operated indoor units 3 is increased.

Then, in this energy-saving control, the rotational speed of the compressor 10 is controlled by using, as an upper value, the upper-rotational-speed set value corresponding to the operation capacity of the indoor units 3.

Through this energy-saving control, the rotational speed of the compressor 10 is restricted according to the operation capacity of the indoor units 3. Therefore, when the operation capacity of the indoor units 3 is low, the rotational speed of the compressor 10 is prevented from being excessively increased, and an operation for reducing the power is performed.

Then, if it is determined that the inching has occurred at the compressor 10, this energy-saving control is performed, thereby making the upper rotational speed of the compressor 10 lower than that when the inching has occurred and thus suppressing the performance of the compressor 10. Accordingly, the inching at the compressor 10 is suppressed more reliably.

Furthermore, the flows of the anti-inching processing described in the above-described embodiments are merely examples, and an unnecessary step may be deleted, a new step may be added, or the processing order may be changed without departing from the gist of the present invention.

### {Reference Signs List}

1 multi-type air-conditioning system
2 outdoor unit
3A, 3B indoor unit
10 compressor
40 air-conditioner control apparatus
42 inching determining unit
44 pressure control unit
46 restart prohibiting unit

## Claims

1. An air-conditioning-system control apparatus for an air-conditioning system equipped with an outdoor unit and an indoor unit, comprising:
a determination means that determines whether inching, in which starting and stopping are repeated in a certain period of time, has occurred at a compressor; and
a performance suppressing means that suppresses the performance of the compressor if the determination means determines that the inching has occurred.

2. An air-conditioning-system control apparatus according to claim 1, wherein the performance suppressing means adjusts a target pressure of a refrigerant so that a rotational speed of the compressor is made lower than that when the inching has occurred.

3. An air-conditioning-system control apparatus according to claim 1, wherein the performance suppressing means makes an upper rotational speed of the compressor lower than that when the inching has occurred.

4. An air-conditioning-system control apparatus according to one of claims 1 to 3, further comprising a restart prohibiting means that prohibits restarting of the compressor for a predetermined period of time if the determination means determines that the inching has occurred,
wherein the performance suppressing means suppresses the performance of the compressor when the difference between a set temperature of the indoor unit and a room temperature is equal to or smaller than a predetermined value.

5. An air-conditioning system, comprising:
an outdoor unit;
an indoor unit; and
a control apparatus according to one of claims 1 to 4.

6. An air-conditioning-system control program for an air-conditioning system equipped with an outdoor unit and an indoor unit, the program causing a computer to function as:
a determination means that determines whether inching, in which starting and stopping are repeated in a certain period of time, has occurred at a compressor; and
a performance suppressing means that suppresses the performance of the compressor if the determination means determines that the inching has occurred.

7. An air-conditioning-system control method for an air-conditioning system equipped with an outdoor unit and an indoor unit, the method comprising:
a first processing step of determining whether inching, in which starting and stopping are repeated in a certain period of time, has occurred at a compressor; and
a second processing step of suppressing the performance of the compressor if it is determined in the first processing step that the inching has occurred.
